(19) Europäisches Patentamt
European Patent Office
Office européen des brevets

(11) **EP 0 990 992 A2**

(12) **EUROPÄISCHE PATENTANMELDUNG**

(43) Veröffentlichungstag:
05.04.2000 Patentblatt 2000/14

(51) Int. Cl.[7]: **G06F 17/14**

(21) Anmeldenummer: **99119288.1**

(22) Anmeldetag: **28.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.09.1998 DE 19844482**

(71) Anmelder:
**SIEMENS AKTIENGESELLSCHAFT**
**80333 München (DE)**

(72) Erfinder:
• **Wiedholz, Christian**
  **80339 München (DE)**
• **Schneider, Claus**
  **81739 München (DE)**
• **Ecker, Wolfgang, Dr.**
  **81375 München (DE)**

(54) **Diskreter/invers-diskreter Cosinus-Transformationsvorrichtung und Anordnung**

(57)     Vorrichtung zur Transformation entsprechend einer bestimmten Transformationsvorschrift (F) N-stelliger Wertetupel ($\underline{x}$) in jeweils zugeordnete transformierte M-stellige Wertetupel ($\underline{u}$), mit einer Transformationseinrichtung (1) zur Realisierung der Transformationsvorschrift (F) und einer zusätzliche Einrichtung (1') zum Fernhalten zumindest eines zu transformierenden bestimmten Tupels ($\underline{x}_0$) von der Transformationseinrichtung (1) und zur Gewinnung des diesem bestimmten Tupel ($\underline{x}_0$) zugeordneten transformierten Tupels ($\underline{u}_g$) auf eine von der Transformationseinrichtung (1) verschiedene Art und Weise. Anwendung: Datenkompression bei Bildverarbeitung, insbesondere mit MPEG, JPEG und/oder H.261.

FIG 2

EP 0 990 992 A2

**Beschreibung**

Die Erfindung betrifft eine Vorrichtung zur Transformation entsprechend einer bestimmten Transformationsvorschrift N-stelliger Wertetupel in jeweils zugeordnete transformierte M-stellige Wertetupel nach dem Oberbegriff des Anspruchs 1.

Unter einem Wertetupel ist eine Aneinanderreihung oder Zusammenfassung mehrerer Stellen zu verstehen, deren jede mit einem aus einem vorgegebenen Wertevorrat frei ausgewählten Wert besetzt ist. Ein N-stelliges Wertetupel weist genau N Stellen auf, wobei N eine beliebig wählbare natürliche Zahl ist. Ebenso weist ein M-stelliges Wertetupel genau M Stellen auf, wobei M eine beliebig wählbare natürliche Zahl ist. M kann gleich oder ungleich N sein.

Der Wertevorrat für die zu transformierenden Wertetupel ist eine Menge von Werten, die aus dem Definitionsbereich der Transformationsvorschrift frei ausgewählt ist.

Der Definitionsbereich ist die Gesamtheit aller Werte für welche die Transformationsvorschrift definiert ist, d.h., jedem Tupel, bei dem jede Stelle mit je einem Wert aus dem Definitionsbereichbereich besetzt ist, wird gemäß der Vorschrift jeweils ein transformiertes Wertetupel zugeordnet, bei dem jede Stelle mit einem Wert aus dem Wertebereich der Transformationsvorschrift besetzt ist.

Der Wertebereich ist die Gesamtheit aller Werte, die sich bei der Transformation mit der Transformationsvorschrift aus dem Definitionsbereich ergeben können.

Der bestimmte Wertevorrat für die transformierten Wertetupel ergibt sich aus dem bestimmten Wertevorrat der zu transformierenden Wertetupel durch die Transformationsvorschrift.

Die für praktische Realisierungen von Transformationsvorrichtungen in Frage kommenden Wertevorräte bestehen üblicherweise aus diskreten Werten und sind endlich, obgleich unendlich viele diskrete Werte nicht grundsätzlich ausgeschlossen sind.

Bei einem für die Praxis bedeutsamen Spezialfall weisen der Wertevorrat für die zu transformierenden Wertetupel und der Wertevorrat für die transformierten Wertetupel jeweils die gleiche Anzahl diskreter Werte auf.

Unter den Wertetupeln können generell unterschieden werden Tupel, bei denen alle Stellen mit voneinander verschiedenen Werten besetzt sind, Tupel, bei denen zwei oder mehrere Stellen mit einem und demselben Wert besetzt sind, zumindest eine Stelle aber mit einem von diesem Wert verschiedenen anderen Wert besetzt ist, und Gleichwerttupel, bei denen alle Stellen mit einem und demselben Wert besetzt sind.

Die Transformationsvorschrift wird in einer Transformationseinrichtung der Vorrichtung realisiert, die einen Eingang zum Zuführen jedes zu transformierenden Tupels und Einkoppeln dieses Tupels in die Einrichtung aufweist, aus jedem eingekoppelten Tupel das diesem Tupel zugeordnete transformierte Tupel entsprechend der Transformationsvorschrift berechnet, und einen Ausgang zum Auskoppeln des diesem Tupel zugeordneten transformierten Tupels aus der Einrichtung aufweist.

Ein Beispiel einer Transformationsvorschrift ist eine lineare Transformation, die durch eine Matrix charakterisiert ist, mit der ein zu transformierendes Tupel zur Gewinnung des diesem Tupel zugeordneten transformierten Tupels zu multiplizieren ist.

Transformationsvorschriften in Form linearer Transformationen spielen z.B. bei der optischen Bildverarbeitung eine bedeutende Rolle und bilden dort einen Kernbestandteil von Verfahren zur Kompression von Bildinformation.

Solche Verfahren sind insbesondere in Bezug auf die visuelle Kommunikation innerhalb verschiedener internationaler Standardisierungsgremien entwickelt worden und werden laufend weiterentwickelt. Solche Gremien sind beispielsweise ISO, IEC und ITU (früher CCITT). Besonders zu erwähnen sind die "Joint Photographic Experts Group" (JPEG) von ISO/IEC, die einen internationalen Standard zur Kompression von unbewegten Bildern erarbeitet hat, die ITU, welche die H.261-Norm für Bildtelephonie und Videokonferenzen vorgeschlagen hat, und die "Moving Picture coding Experts Group" (MPEG) von ISO/IEC, die in verschiedenen Standards, beispielsweise MPEG-1, MPEG-2 und MPEG-4, einen Großteil der Kompression bewegten Bildern abzudecken versucht.

All diesen Standards ist gemeinsam, daß sie als Kernbestandteil eine lineare Transformation in Form der mit DCT bezeichneten diskreten Cosinustransformation (siehe N. Ahmed et al.: „Discrete Cosine Transform", IEEE Transactions on Computers, January 1974, pp. 90 - 93) beinhalten, die zu einer Transformation vom Ortsraum in den Ortsfrequenzraum oder vom Zeitraum in den Zeitfrequenzraum sowie zu einer Reduktion von Redundanz verwendet wird.

Überdies ist die zur DCT inverse diskrete Cosinustransformation zu nennen, die mit IDCT bezeichnet wird und die umgekehrte Transformation ausführt, beispielsweise eine von der DCT ausgeführte Transformation rücktransformiert. Der IDCT kommt besondere Bedeutung zu, da sie in großen Stückzahlen in Decodierern im Massenmarkt verwendet findet.

Bei einer Bildverarbeitung unter Verwendung der DCT und/oder IDCT als Transformationsvorschrift zur Bildkompression besteht beispielsweise der Wertevorrat für die zu transformierenden Werttupel aus diskreten Werten in Form von Helligkeits- und/oder Farbstufen für das zu verarbeitende Bild.

Dieses Bild besteht beispielsweise aus matrixförmig in Zeilen und Spalten angeordneten Bildpunkten bzw. Pixeln, die einzeln auf ihre Helligkeit und/oder Farbe hin abgetastet werden. Der abgetasteten Helligkeit und/oder Farbe eines Pixels wird diejenige Helligkeits- bzw. Farbstufe als Wert dieses Pixels zugeordnet, die der abgetasteten Helligkeit und/oder Farbe dieses Pixels am nächsten liegt.

Werden die Pixel in beliebiger Reihenfolge zeitlich nacheinander abgetastet, entsteht eine Folge von Werten, die als ein mehrstelliges Wertetupel aufgefaßt werden kann, bei dem jede Stelle genau einem Pixel zugeordnet ist und mit dem Wert dieses Pixels besetzt ist. Sind die Werte der Pixel jeweils binär codiert, liegt dieses mehrstellige Wertetupel zudem als eine Folge von Bits vor, deren jedes mit dem Binärwert 0 oder dem Binärwert 1 besetzt ist.

In der Praxis ist die Anzahl der Pixel eines Bildes für eine Kompressionsverarbeitung mit Hilfe der DCT und/oder IDCT meist viel zu groß. Beispielsweise hat ein Fernsehvollbild des PAL-Systems 576 sichtbare Zeilen mit jeweils 720 Pixeln, d.h., die Pixel sind in 576 Zeilen und 720 Spalten angeordnet. Für eine brauchbare Bildverarbeitung unter Verwendung der DCT und/oder IDCT sind dagegen zu transformierende Wertetupel mit einer Anzahl N von Stellen geeignet, die bedeutend kleiner als diese Zahl Zeilen und/oder Zahl Pixel pro Zeile ist

Jedes solche zu verarbeitende Bild wird aus diesem Grunde in Blöcke aus N Zeilen oder Spalten mit jeweils N Pixeln pro Zeile bzw. Spalte unterteilt, wobei N bedeutend kleiner als die Zahl der Zeilen und/oder Spalten des Bildes ist. Zweckmäßigerweise besteht jeder Block aus unmittelbar benachbarten Zeilen und Spalten des Bildes, so daß jeder Block eine Matrix bildet, in der die Pixel in N unmittelbar benachbarten Zeilen und N unmittelbar benachbarten Spalten angeordnet sind.

Zumindest bei einem Bild wird für jeden solchen Block jeweils eine Kompressionsverarbeitung mit Hilfe der DCT und/oder IDCT derart durchgeführt, daß die durch Abtastung der Pixel dieses Blocks gewonnenen N Werte jeder Zeile dieses Blocks dem Eingang der Transformationseinrichtung zur Realisierung der DCT und/oder IDCT als N-stelliges Wertetupel und die N Werte jeder Spalte dieses Blocks als N-stelliges Wertetupel zugeführt werden.

Für die Verarbeitung von Fernsehbildern hat sich aus verschiedenen Gründen, auf die hier nicht näher einzugehen ist, N = 8 als zweckmäßig erwiesen.

Die Transformationseinrichtung zur Realisierung der DCT und/oder IDCT berechnet aus jedem eingekoppelten Wertetupel das zugehörige mehrstellige transformierte Wertetupel und gibt dieses an ihrem Ausgang ab.

Die Berechnung sowohl der DCT als auch der IDCT ist auch im Fall N = 8 noch sehr aufwendig und benötigt die mit Abstand größte Rechenleistung im Vergleich zu den restlichen Schritten der Bildkompressionsalgorithmen. Die offensichtlichste und auch rechenintensivste Lösung ist eine Multiplikation mit zwei Matrizen, deren jede N Zeilen und N Spalten aufweist. Es gibt zahlreiche schnellere Algorithmen zur Berechnung der DCT und/oder IDCT.

Der Erfindung liegt die Aufgabe zugrunde, aufzuzeigen, wie bei einer Vorrichtung der genannten Art die Rechenschnelligkeit weiter erhöht werden kann.

Diese Aufgabe wird durch eine Vorrichtung der genannten Art gelöst, welche die im kennzeichnenden Teil des Anspruchs 1 angegebenen Merkmale aufweist.

Der Erfindung liegt die in Bezug auf die bekannten internationalen Standards zur Kompression von Bildern gewonnene neue Erkenntnis zugrunde,

a) daß es dort einen großen Prozentsatz von zu transformierenden Tupeln gibt, der aus Gleichwerttupeln oder aus Tupeln besteht, bei denen jeweils nur wenige Stellen mit je einem Wert besetzt sind, der von einem bestimmten Wert abweicht, mit dem alle übrigen Stellen dieses Tupels besetzt sind, und die durch die Transformationsvorschrift in je ein Gleichwerttupel transformiert werden, bei dem alle Stellen mit dem bestimmten Wert besetzt sind, und/oder

b) daß es in dem Fall, daß die zu transformierenden Tupel Zeilen und Spalten einer Wertematrix sind, einen beachtlichen Prozentsatz an Matrizen bzw. Blöcken mit Zeilen und/oder Spalten gibt, bei denen nur wenige Stellen mit je einem Wert besetzt sind, der von einem bestimmten Wert abweicht, mit dem alle übrigen Stellen dieses Tupels besetzt sind, und die durch die Transformationsvorschrift in je ein Gleichwerttupel transformiert werden, bei dem alle Stellen mit einem bestimmten Wert besetzt sind, und/oder

c) daß es einen relativ großen Prozentsatz von zu transformierenden Tupeln gibt, der aus Tupeln besteht, bei denen jeweils alle Stellen bis auf eine Stelle jeweils mit einem und demselben bestimmten Wert besetzt sind und die eine Stelle mit einem von diesem Wert verschiedenen anderen Wert besetzt ist, und die von der Transformationsvorschrift jeweils in ein Gleichwerttupel transformiert werden, bei dem jede Stelle mit einem und demselben Wert besetzt ist, oder

d) daß es einen relativ großen Prozentsatz von zu transformierenden Tupeln gibt, der aus Gleichwerttupeln besteht, bei denen jeweils jede Stelle mit einem und demselben Wert besetzt ist, und die von der Transformationsvorschrift jeweils in ein Tupel transformiert werden, bei dem alle Stellen bis auf eine Stelle jeweils mit einem und demselben bestimmten Wert besetzt sind und die eine Stelle mit einem von diesem Wert verschiedenen anderen Wert besetzt ist.

Der Erfindung liegt die weitere Erkenntnis zugrunde, daß die unter a) bis d) genannten zu transformierenden Tupel leicht zu erkennen sind und, da die diesen Tupeln zugeordneten transformierten Tupel von vornherein bekannt sind, leichter und schneller auf andere Art und Weise als durch die aufwendige Berechnung in der Transformationseinrichtung in die jeweils zugeordneten transformierten Tupel umzuwandeln sind.

Zur Realisierung dieses Erfindungsgedankens weist die eingangs genannte Vorrichtung die im Anspruch 1 angegebene zusätzliche Einrichtung zum Fernhalten zumindest eines bestimmten zu transformierenden Tupels vom Eingang der Transformationseinrichtung und zur Gewinnung des diesem bestimmten Tupel aufgrund der Transformationsvorschrift zugeordneten transformierten Tupels auf eine von der Berechnung dieses transformierten Tupels in der Transformationseinrichtung verschiedene Art und Weise auf.

Die Erfindung ist nicht auf die unter a) bis d) angegebenen zu transformierenden Tupel beschränkt, sondern überall dort mit Erfolg anwendbar, wo eine bestimmte Art Tupel mit einer gewissen Häufigkeit in den zu transformierenden Tupeln vorkommt und die Transformation jedes Tupels dieser Art in das ihm zugeordnete transformierte Tupel schneller auf andere Art und Weise als durch Berechnung in der Transformationsvorrichtung durchgeführt werden kann.

Ein wesentliches Kennzeichen der vorliegenden Erfindung ist die von den zu transformierenden Tupeln abhängige Berechnung der zugeordneten transformierten Tupel in der Transformationseinrichtung derart, daß der Transformationseinrichtung nicht ausnahmslos alle sondern eine bestimmte geringere Zahl zu transformierender Tupel zur Berechnung zugeführt und die bekannten übrigen Tupel schneller auf andere Art und Weise transformiert werden. Der dadurch erreichte Gewinn ist eine deutliche Verringerung der benötigten Rechenleistung.

Die erfindungsgemäße zusätzliche Einrichtung ist vorzugsweise derart ausgebildet, daß sie aufweist:

- eine Tupel-Zuordnungseinrichtung zum Zuordnen jedem zu transformierenden bestimmten Tupel das diesem Tupel zugeordnete transformierte Tupel auf andere Art und Weise als durch die Berechnung in der Transformationseinrichtung, welche Zuordnungseinrichtung einen Eingang zum Einkoppeln jedes bestimmten Tupels in die Zuordnungseinrichtung und einen Ausgang zum Auskoppeln des diesem bestimmten Tupel in dieser Einrichtung zugeordneten transformierten Tupels aus der Zuordnungseinrichtung aufweist, und
- eine Tupel-Selektoreinrichtung, der jedes zu transformierenden Tupel zugeführt ist, die aus diesen Tupeln jedes zu transformierende bestimmte Tupel selektiert und nicht dem Eingang der Transformationseinrichtung, sondern dem Eingang der Tupel-Zuordnungseinrichtung zuführt, und die jedes von einem bestimmten Tupel verschiedene Tupel dem Eingang der Transformationseinrichtung zuführt.

Bei einer bevorzugten und Ausgestaltung weist die Tupel-Zuordnungseinrichtung eine Tupel-Änderungseinrichtung auf, welche das einem eingekoppelten bestimmten Tupel zugeordnete transformierte Tupel durch Änderung dieses bestimmten Tupels derart zuordnet, daß der Wert jeder Stelle dieses bestimmten Tupels bei einer Nichtübereinstimmung mit dem bekannten Wert der gleichen Stelle dieses transformierten Tupels in den bekannten Wert geändert und bei Übereinstimmung mit diesem bekannten Wert beibehalten wird, wobei das derart geänderte bestimmte Tupel am Ausgang der Tupel-Zuordnungseinrichtung als das dem bestimmten Tupel zugeordnete transformierte Tupel ausgekoppelt wird.

Die Änderung des Wertes einer Stelle eines Tupels durch einen anderen Wert kann auf einfache Weise durch Austauschen des einen und anderen Werts vorgenommen werden.

Unter Umständen ist es jedoch vorteilhaft, wenn der Wert einer Stelle eines eingekoppelten bestimmten Tupels bei einer Nichtübereinstimmung mit dem bekannten Wert der gleichen Stelle des diesem bestimmten Tupel zugeordneten transformierten Tupels durch eine Multiplikation mit einem Faktor, der diesen bekannten Wert ergibt, in den bekannten Wert geändert wird.

Vorteilhaft kann es auch sein, wenn die Tupel-Zuordnungseinrichtung einen Speicher aufweist, in welchem ein transformiertes Tupel, das einem zu transformierenden bestimmten Tupel zugeordnet ist, gespeichert ist, und aus dem dieses gespeicherte Tupel bei einer Einkopplung dieses zu transformierenden bestimmten Tupels ausgelesen und am Ausgang der Tupel-Zuordnungseinrichtung ausgegeben wird. Das bestimmte Tupel kann in diesem Fall als Auslesesignal zum Auslesen des Speichers verwendet werden.

Ein derartiger Speicher ist insbesondere in dem Fall vorteilhaft, daß zwei oder mehreren zu transformierenden bestimmten Tupeln jeweils ein und dasselbe transformierte Tupel zugeordnet ist. In einem solchen Fall braucht dieses transformierte Tupel nur einmal abgespeichert zu werden und jedes dieser zwei oder mehreren bestimmten Tupel kann jeweils den Auslösevorgang auslösen.

Insbesondere bei der optischen Bildverarbeitung kommt es oft vor, daß zwei oder mehreren voneinander verschiedenen zu transformierenden bestimmten Tupeln ein und dasselbe transformierte Tupel zugeordnet ist.

Die Tupel-Zuordnungseinrichtung kann verschiedene Arten von Tupel-Änderungseinrichtungen und/oder Speichern aufweisen, die gleichzeitig oder nacheinander, insbesondere in Abhängigkeit von den zu transformierenden bestimmten Tupeln betrieben werden können.

Die zusätzliche Einrichtung weist zweckmäßigerweise eine Zeitabstimmungseinrichtung auf, die bewirkt, daß jedes von der zusätzlichen Einrichtung einem zugeführten zu transformierenden bestimmten Tupel zugeordnete transformierte Tupel dem Ausgang der Transformationseinrichtung zu einem Zeitpunkt zugeführt ist, der zwischen zwei transformierten Tupeln liegt, die am Ausgang der Transformationseinrichtung aufeinanderfolgend erscheinen und von der Transformationseinrichtung aus zwei dem Eingang der Transformationseinrichtung hintereinander zugeführten zu transformierenden Tupeln berechnet worden sind, zwischen denen sich das bestimmte Tupel befindet, deren jedes von dem bestimmten Tupel verschieden ist und zwischen denen sich kein weiteres von dem bestimmten Tupel verschiedenes Tupel befindet.

Die Zeitabstimmungseinrichtung kann durch eine Zeitverzögerungseinrichtung realisiert sein, die eine an eine Berechnungszeit in der Transformationseinrichtung angepaßte Zeitverzögerung für durch die zusätzliche Einrichtung zum Ausgang der Transformationseinrichtung übertragene Signale erzeugt.

Bei einer bevorzugten erfindungsgemäßen Anordnung ist die von der Transformationseinrichtung ausgeführte Transformationsvorschrift eine lineare Transformation, die einer Multiplikation jedes übertragenen Tupels mit zumindest einer definierten Matrix entspricht. Insbesondere ist die lineare Transformation eine diskrete Cosinustransformation (DCT) und/oder eine inverse diskrete Cosinustransformation (IDCT).

Sowohl bei der DCT als auch der IDCT verbessert die erfindungsgemäße Anordnung vorteilhafterweise den sogenannten Row-column-approach, auf dem praktisch alle realisierten DCT- und IDCT-Algorithmen basieren, um eine datenabhängige Komponente. Beim Row-column-approach wird die zweidimensionale $N \times N$-fache DCT bzw. $N \times N$-fache IDCT in 2N eindimensionale N-fache DCT bzw. N-fache IDCT zerlegt. Die Berechnung der eindimensionalen N-fachen DCT bzw. N-fachen IDCT kann mit einem beliebigen schnellen eindimensionalen DCT- bzw. IDCT-Algorithmus erfolgen.

Die erfindungsgemäße Anordnung ist insbesondere und vorteilhafterweise zu einer schnellen Erzeugung transformierter Tupel aus zu transformierenden Tupeln geeignet, wie sie oben unter a) bis d) angegeben sind.

Nach einer Untersuchung von Videodatenströmen wurde die neue Erkenntnis gewonnen, daß viele Berechnungsschritte der DCT bzw. IDCT nicht notwendig sind, da das Ergebnis dieser Schritte bereits bekannt ist.

Die Erfindung wird in der nachfolgenden Beschreibung anhand der Zeichnungen beispielhaft näher erläutert. Es zeigen:

Figur 1    eine Aneinanderreihung mehrerer Stellen, deren jede mit je einem Wert aus einem bestimmten Wertevorrat zu besetzen ist, wonach ein mehrstelliges Tupel gegeben ist,

Figur 2    ein Blockschaltbild eines Ausführungsbeispiels der Vorrichtung nach Anspruch 2,

Figur 3    eine Block aus matrixförmig in Zeilen und Spalten angeordneten Stellen, deren jede mit je einem Wert aus einem bestimmten Wertevorrat zu besetzen ist,

Figur 4    einen Block aus matrixförmig in Zeilen und Spalten angeordneten Stellen, deren jede mit je einem Wert aus einem bestimmten Wertevorrat zu besetzen ist,

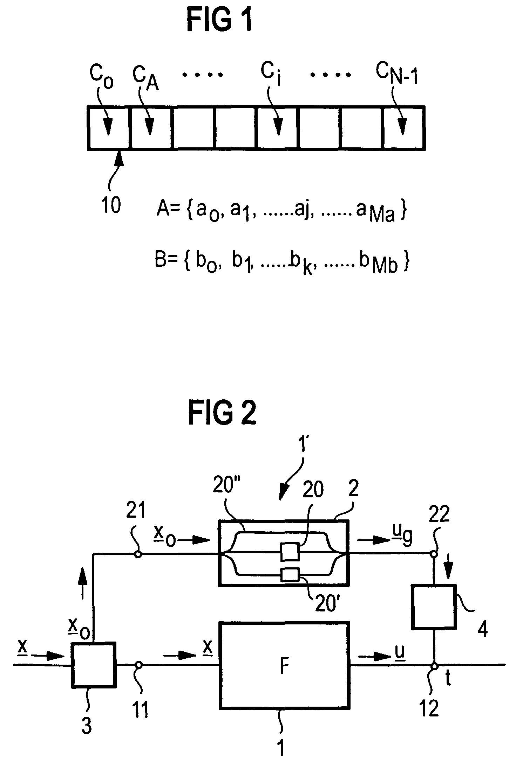

Die Figur 1 zeigt eine Aneinanderreihung 10 von N Stellen $c_i$ mit i = 0, 2, ...N-1, deren jede mit je einem Wert aus einem bestimmten Wertevorrat A zu besetzen ist.

A ist beispielsweise eine Menge aus voneinander verschiedenen Werten $a_j$ mit j = 0, 1, 2, ... $M_a$ wobei $M_a$ eine frei wählbare natürliche Zahl ist. $M_a$ enthält demnach $M_a + 1$ verschiedene Werte $a_j$.

Ist jede Stelle $c_i$ der Aneinanderreihung 10 mit je einem Wert $a_j$ aus dem Wertevorrat A besetzt, ist ein N-stelliges Wertetupel gegeben.

Die Wertetupel, deren Stellen $c_i$ mit Werten $a_j$ aus dem Wertevorrat A besetzt sind, seien die zu transformierenden Tupel, die zusammenfassend mit $\underline{x}$ bezeichnet sind.

Ähnliches gilt für die zusammenfassend mit $\underline{u}$ bezeichneten transformierten Wertetupel. In der Figur 1 besteht für diese Tupel $\underline{u}$ die Ansammlung 10 aus M Stellen $c_i$ mit i = 0, 2, ... M-1, deren jede mit einem Wert aus einem bestimmten Wertevorrat B zu besetzen ist. M kann größer, gleich oder kleiner als N sein.

B ist eine Menge aus voneinander verschiedenen Werten $b_k$ mit k = 0, 1, 2, ... $M_b$, wobei $M_b$ eine frei wählbare natürliche Zahl ist. $M_b$ enthält demnach $M_b + 1$ verschiedene Werte $b_k$.

Der Wertevorrat B ist durch den Wertevorrat A und die generell mit F bezeichnete Transformationsvorschrift bestimmt.

Ist jede der M Stellen $c_i$ der Aneinanderreihung 10 mit je einem Wert $b_k$ aus dem Wertevorrat B besetzt, ist ein M-stelliges transformiertes Wertetupel $\underline{u}$ gegeben.

Die Transformationsvorschrift F ist durch eine in der Figur 2 blockmäßig und mit 1 bezeichnete Transformationseinrichtung realisiert, die einen Eingang 11 zum Zuführen jedes zu transformierenden Tupels $\underline{x}$ und Einkoppeln dieses Tupels $\underline{x}$ in die Einrichtung 1 aufweist, die aus jedem eingekoppelten Tupel $\underline{x}$ das diesem Tupel $\underline{x}$ zugeordnete transformierte Tupel $\underline{u}$ entsprechend der Transformationsvorschrift F berechnet, und die einen Ausgang 12 zum Auskoppeln des diesem Tupel $\underline{x}$ zugeordneten transformierten Tupels $\underline{u}$ aus der Einrichtung 1 aufweist.

Die Einzelheiten der Berechnung nach der Transformationsvorschrift F hängen von letzterer ab und sind hier nicht von Bedeutung. Es genügt darauf hinzuweisen, daß die meisten Vorschriften sehr rechenaufwendig sind.

Der Rechenaufwand kann durch die zusätzliche Einrichtung 1' vermindert werden, welche zumindest ein bestimmtes zu transformierendes Tupel $x_0$ vom Eingang 11 der Transformationseinrichtung 1 fernhält und das diesem bestimmten Tupel $x_0$ aufgrund der Transformationsvorschrift F zugeordnete transformierte Tupel $u_g$ auf eine von der Berechnung dieses transformierten Tupels $u_g$ in der Transformationseinrichtung 1 verschiedene Art und Weise gewinnt.

An die Gewinnung der von der Berechnung des transformierten Tupels $u_g$ in der Transformationseinrichtung 1 verschiedene Art und Weise ist nur die Forderung zu stellen, daß diese Gewinnung mit geringerem Rechenaufwand und insbesondere schneller als in der Transformationseinrichtung 1 erfolgt.

Wie oben dargelegt treten z.B. bei der praktischen Bildverarbeitung in der Gesamtheit der zu transformierenden Wertetupeln $x$ nicht nur einzelne zu transformierender Wertetupel $x_0$ auf, bei denen diese Methode erfolgreich angewandt werden kann, sondern eine Vielzahl solcher bestimmter Tupel $x_0$, die nicht nur eine prinzipielle, sondern überdies eine praktisch spürbare schnellere Verarbeitung mit sich bringt.

Bei der Vorrichtung nach Figur 2 weist beispielsweise die zusätzliche Einrichtung 1' eine Tupel-Zuordnungseinrichtung 2 auf, die jedem dieser bestimmten zu transformierenden Tupel $x_0$ das transformierte Tupel $u_g$ auf andere Art und Weise als durch die Berechnung in der Transformationseinrichtung 1 zuordnet.

Beispielsweise kann diese Zuordnung so erfolgen, daß die Zuordnungseinrichtung 2 bei einem solchen bestimmten Tupel $x_0$ eine Stelle ci, die mit einem Wert besetzt ist, der von dem bestimmten Wert verschieden ist, mit dem die gleiche Stelle $c_i$ des diesem Tupel $x_0$ zugeordneten transformierten Tupels $u_g$ besetzt ist, auf diesen bestimmten Wert gesetzt wird, und der Wert einer Stelle $c_i$ dieses bestimmten Tupels $x_0$ beibehalten wird, wenn dieser Wert mit dem bestimmten Wert übereinstimmt, mit dem die gleiche Stelle $c_i$ dieses transformierten Tupels $u_g$ besetzt ist.

Die Zuordnungseinrichtung 2 kann auch so ausgebildet sein, daß sie bei einem solchen bestimmten Tupel $x_0$ den Wert einer Stelle $c_i$, der von dem bestimmten Wert verschieden ist, mit dem die gleiche Stelle $c_i$ des diesem Tupel $x_0$ zugeordneten transformierten Tupels $u_g$ besetzt ist, mit einem Faktor a multipliziert, der diesen bestimmten Wert dieser Stelle $c_i$ dieses transformierten Tupels $u_g$ ergibt.

Diese beispielhaften Arten der Zuordnung sind insbesondere dann vorteilhaft, wenn bei dem zu transformierenden bestimmte Tupel $x_0$ nur einer oder wenige der N Stellen $c_i$ je einen Wert aufweisen, der von einem Wert abweicht, mit dem die gleiche Stelle $c_i$ des ebenfalls N-stelligen transformierten Tupels $u_g$ besetzt ist, das diesem bestimmten Tupel $x_0$ zugeordnet ist, und wenn es ein Vielzahl solcher einander zugeordneter Tupel-paare $x_0$, $u_g$ gibt.

Beispielsweise gibt es bei der optischen Bildverarbeitung oft den Fall, daß das jedem solchen zu transformierenden bestimmten Tupel $x_0$ zugeordnete transformierte Tupel $u_g$ ein Gleichwerttupel ist, bei dem alle Stellen $c_i$ mit einem und demselben Wert besetzt sind. Es müssen dann pro solchem bestimmten Tupel $x_0$ nur einige wenige Werte dieses Tupels $x_0$ geändert werden, um zu dem diesem Tupel $x_0$ zugeordneten transformierten Tupel $u_g$ zu gelangen.

Dies gilt insbesondere für den Fall, daß zwei oder mehreren oder gar allen diesen bestimmten Tupeln $x_0$ ein und dasselbe Gleichwerttupel $u_g$ zugeordnet ist.

Die Zuordnungseinrichtung 2 kann beispielsweise auch so ausgebildet sein, daß ein transformiertes Tupel $u_g$, das einem zu transformierenden bestimmten Tupel $x_0$ zugeordnet ist, in einem Speicher der Zuordnungseinrichtung 2 mit einer Adresse gespeichert ist, und aus dem dieses gespeicherte Tupel $u_g$ bei einer Einkopplung dieses zu transformierenden bestimmten Tupels $x_0$ ausgelesen und am Ausgang 22 der Tupel-Zuordnungseinrichtung 2 ausgegeben wird.

In jedem Fall weist die Tupel-Zuordnungseinrichtung 2 einen Eingang 21 zum Einkoppeln jedes der bestimmten Tupel $x_0$ in diese Einrichtung 2 und einen Ausgang 22 zum Auskoppeln des diesem bestimmten Tupel $x_0$ zugeordneten und in dieser Einrichtung 2 erzeugten transformierten Tupels $u_g$ aus dieser Einrichtung 2 auf.

In die Transformationseinrichtung 1 dürfen keine bestimmten Tupeln $x_0$, sondern nur zu transformierende Tupel $x$, die von den bestimmten Tupeln $x_0$ verschieden sind, zur Berechnung in dieser Einrichtung 1 eingekoppelt werden. Dies bedeutet, daß jedes zu transformierende bestimmte Tupel $x_0$ vom Eingang 11 der Transformationseinrichtung 1 ferngehalten werden muß und diesem Eingang 11 nur die von den bestimmten Tupeln $x_0$ verschiedenen zu transformierende Tupel $x$ zugeführt werden dürfen.

Zu diesem Zweck ist eine Tupel-Selektoreinrichtung 3 vorhanden, der jedes zu transformierenden Tupel $x$ zugeführt ist, die aus diesen Tupeln $x$ jedes zu transformierende bestimmte Tupel $x_0$ selektiert und nicht dem Eingang 11 der Transformationseinrichtung 1, sondern dem Eingang 21 der Tupel-Zuordnungseinrichtung 2 zuführt, und die jedes von einem bestimmten Tupel $x_0$ verschiedene Tupel $x$ dem Eingang 11 der Transformationseinrichtung 1 zuführt.

Die Tupel-Zuordnungseinrichtung 2 kann eine Tupel-Änderungseinrichtung 20 aufweisen, welche das einem eingekoppelten bestimmten Tupel $x_0$ zugeordnete transformierte Tupel $u_g$ durch Änderung dieses bestimmten Tupels $x_0$ derart zuordnet, daß der Wert jeder Stelle $c_i$ dieses bestimmten Tupels $x_0$ bei einer Nichtübereinstimmung mit dem bekannten Wert der

gleichen Stelle $c_i$ dieses transformierten Tupels $\underline{u}_g$ in den bekannten Wert geändert und bei Übereinstimmung mit diesem bekannten Wert beibehalten wird, wobei das derart geänderte bestimmte Tupel am Ausgang 22 der Tupel-Zuordnungseinrichtung 2 als das dem bestimmten Tupel $\underline{x}_0$ zugeordnete transformierte Tupel $\underline{u}_g$ ausgekoppelt wird.

Die Änderung des Wertes einer Stelle $c_i$ eines bestimmten Tupels $\underline{x}_0$ durch einen anderen Wert kann auf einfache Weise durch Austauschen des einen und anderen Werts vorgenommen werden.

Der Wert einer Stelle $c_i$ eines eingekoppelten bestimmten Tupels $\underline{x}_0$ kann bei einer Nichtübereinstimmung mit dem bekannten Wert der gleichen Stelle $c_i$ des diesem bestimmten Tupel $\underline{x}_0$ zugeordneten transformierten Tupels $\underline{u}_g$ durch eine Multiplikation mit einem Faktor a, der diesen bekannten Wert ergibt, in den bekannten Wert geändert werden.

Die Tupel-Zuordnungseinrichtung 2 kann anstelle Tupel-Änderungseinrichtung 20 oder zusätzlich zu dieser Einrichtung 20 einen Speicher 20' aufweisen, in welchem ein transformiertes Tupel $\underline{u}_g$, das einem zu transformierenden bestimmten Tupel $\underline{x}_0$ zugeordnet ist, gespeichert ist, und aus dem dieses gespeicherte Tupel $\underline{u}_g$ bei einer Einkopplung dieses zu transformierenden bestimmten Tupels $\underline{x}_0$ ausgelesen und am Ausgang 22 der Tupel-Zuordnungseinrichtung 2 ausgegeben wird.

Die zu transformierenden Tupel $\underline{x}$ werden üblicherweise dem Eingang 11 der Transformationseinrichtung 1 zeitlich nacheinander zugeführt und die transformierten Tupel $\underline{u}$ erscheinen in der gleichen Reihenfolge wie die zugeführten Tupel $\underline{x}$ zeitlich nach einander am Ausgang 12 der Transformationseinrichtung 1. Da die zu transformierenden bestimmten Tupel $\underline{x}_0$ nicht dem Eingang 11 der Transformationseinrichtung 1 zugeführt und in dieser Einrichtung 1 berechnet werden, sondern in der zusätzlichen Einrichtung 1' auf andere Art und Weise in transformierte Tupel $\underline{u}_g$ umgewandelt werden, ist dafür Sorge zu tragen, daß jedes solche transformierte Tupel $\underline{u}_g$ zum Richtigen Zeitpunkt in die Reihe der am Ausgang 12 der Transformationseinrichtung 1 erscheinenden transformierten Tupel $\underline{u}$ eingeordnet wird.

Zu diesem Zweck weist die zusätzliche Einrichtung 1' zweckmäßigerweise eine Zeitabstimmungseinrichtung 4 auf, die bewirkt, daß jedes von dieser Einrichtung 1' einem zugeführten zu transformierenden bestimmten Tupel $\underline{x}_0$ zugeordnete transformierte Tupel $\underline{u}_g$ dem Ausgang 12 der Transformationseinrichtung 1 zum richtigen Zeitpunkt zugeführt wird.

Der richtige Zeitpunkt ist der Zeitpunkt t, der zwischen zwei transformierten Tupeln $\underline{u}$ liegt, die am Ausgang 12 der Transformationseinrichtung 1 aufeinanderfolgend erscheinen und von der Transformationseinrichtung 1 aus zwei dem Eingang 11 der Transformationseinrichtung 1 hintereinander zugeführten zu transformierenden Tupeln $\underline{x}$ berechnet worden sind, zwischen denen sich das bestimmte Tupel $\underline{x}_0$ befindet, deren jedes von dem bestimmten Tupel $\underline{x}_0$ verschieden ist und zwischen denen sich kein weiteres von dem bestimmten Tupel $\underline{x}_0$ verschiedenes Tupel $\underline{x}$ befindet.

Die Zeitabstimmungseinrichtung 4 kann auf einfache Weise durch eine Zeitverzögerungseinrichtung realisiert sein, die eine an eine Berechnungszeit in der Transformationseinrichtung angepaßte Zeitverzögerung für durch die zusätzliche Einrichtung 1, zum Ausgang 12 der Transformationseinrichtung 1 übertragene Signale erzeugt.

Die Erfindung sei nun an dem in der Beschreibungseinleitung kurz beschriebenen Beispiel des bekannten Bildverarbeitungsverfahrens konkreter erläutert, welches mit dem von ISO/IEC erarbeiteten Standard MPEG-1 oder MPEG-2 arbeitet und die DCT sowie IDCT verwendet und nur soweit erläutert worden ist, wie es zum Verständnis der Erfindung notwendig ist.

Als zu verarbeitendes Bild sei ein Fernsehvollbild des PAL-Systems angenommen, das 576 sichtbare Zeilen mit jeweils 720 Pixeln, oder anders ausgedrückt, matrixförmig in 576 Zeilen und 720 Spalten angeordnete Pixel aufweist.

Bei diesem Verfahren ist jedes zu verarbeitende Bild in Blöcke aus N = 8 Zeilen mit jeweils N = 8 Pixeln pro Zeile unterteilt und besteht aus unmittelbar benachbarten Zeilen des Bildes, so daß jeder Block eine Matrix bildet, in der die Pixel in 8 unmittelbar benachbarten Zeilen 8 und 8 unmittelbar benachbarten Spalten angeordnet sind.

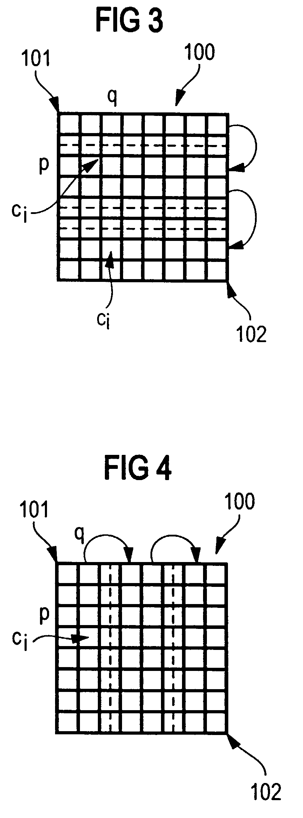

Eine solche Matrix ist in den Figuren 3 und 4 jeweils als eine Matrix 100 dargestellt, die 8 waagrechte Zeilen p und 8 vertikale Spalten q aufweist, wobei in jeder Zeile p und jeder Spalte q pro Pixel je eine Stelle $c_i$ mit i = 0 bis 7 vorgesehen ist. In den dargestellten Matrizen 100 nimmt i in jeder Zeile p in Richtung von links nach rechts und in jeder Spalte q von oben nach unten von 0 auf 7 zu.

Die Pixel bzw. Stellen $c_i$ werden einzeln auf ihre Helligkeit und/oder Farbe hin abgetastet. Der bei jeder Stelle $c_i$ abgetasteten Helligkeit und/oder Farbe wird von mehreren diskreten Helligkeits- bzw. Farbstufen diejenige zugeordnet, die der abgetasteten Helligkeit und/oder Farbe dieser Stelle $c_i$ am nächsten liegt, und bildet einen Wert $a_j$, der dieser Stelle $c_i$ bzw. diesem Pixel zugeordnet ist.

Die mehreren diskreten Helligkeits- bzw. Farbstufen sind als diskrete Zahlenwerte $a_j$ codiert, die zusammen den Wertevorrat A für die zu transformierenden Wertetupel bilden. Die Werte $a_j$ sind jeweils als eine Binärzahl dargestellt, für die beispielsweise 8 Bit vorgesehen sind, so daß jeder Wert $a_j$ jeweils aus einer Folge von acht Bit besteht.

Zumindest bei einem Bild wird für jede solche Matrix 100 jeweils eine Kompressionsverarbeitung mit Hilfe der DCT derart durchgeführt, daß die durch Abtastung der Pixel bzw. Stellen $c_i$ dieser Matrix 100 gewonnenen 8 Werte $a_j$ jeder Zeile p dieser Matrix 100 dem Eingang 11 der Transformationseinrichtung 1 zur Realisierung der DCT als 8-stelliges Wertetupel $\underline{x}$ und ebenso die 8 Werte jeder Spalte q dieser Matrix 100 als 8-stelliges Wertetupel $\underline{x}$ zugeführt werden.

Da die acht Werte jedes zu transformierenden Werttupels $\underline{x}$ je eine Binärzahl bilden, besteht jedes zu transformierende Tupel $\underline{x}$ aus einer Folge von Bits, beispielsweise $8 \times 8 = 64$ Bit.

Bei der DCT sind die ein- und zweidimensionale DCT zu unterscheiden.

Die Transformationseinrichtung 1 zur Realisierung der eindimensionalen DCT berechnet aus jedem eingekoppelten Wertetupel $\underline{x}$ das zugehörige mehrstellige transformierte Wertetupel $\underline{u}$ und gibt dieses an ihrem Ausgang 12 ab.

Da die DCT eine lineare Transformation ist, gilt $\underline{u} = \underline{T} \cdot \underline{x}$, wobei $\underline{T}$ eine bestimmte Matrix ist, die im Fall der DCT eine N×N-Matrix ist, so daß das Tupel $\underline{u}$ ebenso viele Stellen $c_i$ wie das Tupel $\underline{x}$ aufweist, d.h. M = N gilt.

Die eindimensionale DCT transformiert die N-stelligen Tupel $\underline{x}$ vom Ortsraum in N-stellige Tupel $\underline{u}$ im Ortsfrequenzraum.

Bei der zweidimensionalen DCT werden N×N-Matrizen $\underline{X}$ vom Ortsraum in N×N-Matrizen $\underline{U}$ im Ortsfrequenzraum transformiert, wobei $U = T \cdot X \cdot T^T$ gilt und $T^T$ die zu T transponierte Matrix ist.

Die zweidimensionalen DCT läßt sich auf die eindimensionale DCT zurückführen, indem zuerst alle Zeilen der Matrix $\underline{X}$ und dann alle Spalten dieser Matrix $\underline{X}$ oder umgekehrt mit der eindimensionalen DCT berechnet werden.

Die dargestellte Matrix 100 entspricht einer solchen Matrix $\underline{X}$ und demnach werden in einem Fall, der in Figur 3 dargestellt ist, zunächst die von jeder Zeile p gewonnenen Tupel $\underline{x}$ und dann die von jeder Spalte q gewonnenen Tupel $\underline{x}$ mit der Transformationseinrichtung 1 berechnet, oder im anderen Fall, der in Figur 4 dargestellt ist, zunächst die von jeder Spalte q gewonnenen Tupel $\underline{x}$ und dann die von jeder Zeile p gewonnenen Tupel $\underline{x}$ mit der Transformationseinrichtung 1 berechnet.

Das vorstehend für die DCT erläuterte gilt in gleicher Weise für die IDCT, mit dem einzigen Unterschied, daß die IDCT im eindimensionalen Fall Tupel und im zweidimensionalen Fall Matrizen vom Frequenzraum in den Ortsraum transformiert. In bezug auf die Figur 2 bedeutet dies, daß die Transformationseinrichtung 1 die eindimensionale IDCT ausführt, die Tupel $\underline{x}$ sich im Ortsfrequenzraum befinden und in Tupel $\underline{u}$ transformiert werden, die im Ortsraum liegen.

Es hat sich erwiesen, daß im Fall der IDCT bei MPEG-1 bei fast 50% aller vom Ortsfrequenzraum in der Ortsraum zu transformierenden Matrizen 100 alle Stellen $c_i$ mit einem und demselben Wert besetzt sind, der gleich der 8- stelligen Binärzahl 0 ist, bei der jedes Bit den Binärwert 0 aufweist.

Jede Zeile p und jede Spalte q einer solchen Matrix 100 bildet je ein bestimmtes Gleichwerttupel $x_0$, bei dem alle Stellen $c_i$ mit einem und demselben Wert, speziell mit dem Binärwert 0 besetzt ist. Jedes derartige bestimmte Tupel $x_0$ wird von der IDCT in ein transformierte Gleichwerttupel $\underline{u}_g$ umgewandelt, bei dem ebenfalls jede Stelle $c_i$ mit dem Binärwert 0 besetzt ist, so daß sich dieses transformierte Tupel $\underline{u}_g$ nicht von diesem bestimmten Tupel $x_0$ unterscheidet.

Derartige bestimmte Tupel $x_0$ werden zweckmäßigerweise vom Eingang 11 der die IDCT ausführenden Transformationseinrichtung 1 ferngehalten und an dieser Einrichtung 1 vorbei deren Ausgang 12 zugeführt. Die zusätzliche Einrichtung 1' benötigt in diesem Fall nur eine die Transformationseinrichtung 1 überbrückende Umgehungsleitung 20'', welche diese Tupel $x_0$ von der Tupel-Selektoreinrichtung 3 an der Transformationseinrichtung 1 vorbei dem Ausgang 12 dieser Einrichtung 1 zuführt. Die Tupel- Selektoreinrichtung 3 muß diese Tupel $x_0$ erkennen und selektieren.

Die transformierte Matrix 100 kann demnach auf sehr einfache und schnelle Weise allein durch die zusätzliche Einrichtung 1' und ohne eine Berechnung in der Transformationseinrichtung 1 erhalten werden.

Es hat sich auch erwiesen, daß im Fall der IDCT bei MPEG-2 knapp 40% aller vom Ortsfrequenzraum in der Ortsraum zu transformierenden Matrizen 100 alle Stellen $c_i$ bis auf eine mit einem und demselben Wert besetzt sind, der gleich der 8-stelligen Binärzahl 0 ist, und daß die eine Stelle mit einem von null verschiedenen Wert besetzt ist und praktisch immer die Stelle an der rechten unteren Ecke 102 der Matrix 100 ist. Solche Marizen 100 werden von der IDCT in Matrizen 100 transformiert, bei denen jede Stelle ci, auch die an der rechten unteren Ecke 102 mit dem Wert null besetzt ist.

Eine solche Matrix 100 enthält demnach eine Zeile p und eine Spalte q, deren jede ein bestimmtes Tupel $x_0$ bildet, bei dem alle Stellen $c_i$ bis auf eine mit einem und demselben Wert besetzt sind, die eine Stelle aber mit einem von diesem Wert verschiedenen anderen Wert besetzt ist. Diese bestimmten Tupel $x_0$ können durch Ändern in der zusätzlichen Einrichtung 1' dieses anderen Werts in den einen Wert leicht in ein Gleichwerttupel $\underline{u}_g$ transformiert werden.

Auch hier kann die transformierte Matrix 100 auf sehr einfache und schnelle Weise allein durch die zusätzliche Einrichtung 1' und ohne eine Berechnung in der Transformationseinrichtung 1 erhalten werden.

Es wurde außerdem erkannt, daß es einen beachtlichen Prozentsatz an Matrizen 100 mit einer überwiegenden Anzahl Zeilen p und/oder Spalten q gibt, deren Stellen mit einem und demselben Wert 0 besetzt sind. Da jede dieser Zeilen ein Gleich-werttupel $x_0$ bildet, das in das gleiche Gleichwerttupel $\underline{u}_g$ transformiert wird, können diese Zeilen p leicht und schnell durch die zusätzliche Einrichtung 1' und ohne Berechnung in der Transformationseinrichtung 1 transformiert werden.

Hier kann die transformierte Matrix 100 teilweise durch die zusätzliche Einrichtung 1' und teilweise durch Berechnung in der Transformationseinrichtung 1 und damit schneller als durch alleinige Berechnung in dieser Einrichtung 1 erhalten werden.

In der Figur 3 ist ein Fall angedeutet, bei dem die durch eine gestrichelte Linie hervorgehobenen Zeilen Gleichwerttupel $x_0$ bilden, die in der zusätzliche Einrichtung 1' transformiert werden können, die durch die nicht hervorgehobenen anderen Zeilen gebildeten Tupel $\underline{x}$ dagegen in der Transformationseinrichtung 1 berechnet werden müssen. Zu dieser Berechnung können die hervorgehobenen Zeilen übersprungen werden, wie dies durch die gebogenen Pfeile angedeutet ist.

In der Figur 3 ist ein Fall angedeutet, bei dem die durch eine gestrichelte Linie hervorgehobenen Spalten Gleichwerttupel $x_0$ bilden, die in der zusätzliche Einrichtung 1' transformiert werden können, die durch die nicht hervorgehobenen anderen Spalten gebildeten Tupel $\underline{x}$ dagegen in der Transformationseinrichtung 1 berechnet werden müssen. Zu dieser Berechnung können die hervorgehobenen Spalten übersprungen werden, wie dies durch die gebogenen Pfeile angedeutet ist.

Es wurde auch erkannt, daß im Fall von MPEG-1 bei durchschnittlich 17% aller in den Ortsfrequenzraum transformierten Matrizen 100 alle Stellen $c_i$ bis auf eine mit dem Wert 0 besetzt sind, die eine Stelle aber mit einem von null verschiedenen Wert DC besetzt ist. Diese eine Stelle befindet sich in der Regel an der linken oberen Ecke 101 dieser Matrix 100.

Diese Matrix 100 wird durch die IDCT in eine Matrix 100 im Ortsraum transformiert, bei der alle Stellen $c_i$ mit einem und demselben Wert besetzt sind, der gleich DC/8 ist. Diese Matrix 100 kann durch Multiplikation des Wertes DC mit dem Faktor a = 1/8 und besetzen jeder Stelle $c_i$ der transformierten Matrix 100 allein durch die zusätzliche Einrichtung 1' und ohne Berechnung in der Transformationseinrichtung 1 einfach und schnell erhalten werden. Die Multiplikation kann auf einfache Weise durch eine Verschiebung der den Wert DC darstellenden Binärzahl um drei Bit durchgeführt werden.

Es wurde auch gefunden, daß im Fall von MPEG-2 bei einem beachtlichen Prozentsatz aller in den Ortsfrequenzraum transformierten Matrizen 100 alle Stellen $c_i$ bis auf zwei mit dem Wert 0 besetzt sind, die beiden Stellen aber jeweils mit einem von null verschiedenen Wert besetzt ist. Eine dieser beiden Stellen befindet sich in der Regel an der linken oberen Ecke 101 dieser Matrix 100 und ist mit dem Wert DC besetzt. Hier kann so vorgegangen werden, daß zunächst wie vorstehend eine Matrix 100 im Ortsraum erzeugt wird, bei der alle Stellen $c_i$ mit dem Wert DC/8 besetzt sind, und daß erforderlichenfalls die Werte dieser Stellen $c_i$ mit Werten von Stellen $c_i$ einer Matrix korrigiert werden, die sich bei einer Transformation einer anderen Matrix 100 in den Ortsbereich ergeben, die sich von der einen Matrix 100 mit den beiden von null verschiedenen Stellen nur dadurch unterscheidet, daß auch die Stelle an der linken oberen Ecke 101 mit dem Wert 0 besetzt ist.

Abhängig vom Wert DC kann beispielsweise wie folgt vorgegangen werden: Ist (DC+4) ohne Rest durch 8 teilbar, was sehr leicht durch eine Abfrage der drei niedrigstwertigen Bits dieser Binärzahl zu erkennen ist. In diesem Fall ergibt sich die in den Ortsraum transformierte Matrix 100, bei der alle Stellen $c_i$ mit DC/8 besetzt sind. Ergibt sich bei der Division von (DC+4) durch 8 jedoch ein von null verschiedener Rest, entscheidet das Vorzeichen von DC, d.h. ob DC größer oder kleiner als null ist, darüber, mit welcher Matrix die eine Matrix, deren Stellen $c_i$ mit dem Wert DC/8 besetzt sind.

Im Fall von MPEG-2 bestehen etwa 7% aller in den Ortsfrequenzraum transformierten Matrizen 100, aus Matrizen, bei denen die Stelle in der linken oberen Ecke 101 mit dem Wert DC, die Stelle in der rechten unteren Ecke 102 mit dem Wert 1 und alle übrigen Stellen mit dem Wert 0 besetzt sind. In diesem Fall sind die Stellen $c_i$ jeder Zeile p und die Stellen $c_i$ jeder Spalte q einer zur Korrektur der Matrix 100, deren sämtliche Stellen $c_i$ mit DC/8 besetzt sind, verwendeten Matrix 100 jeweils abwechselnd mit dem Wert 1 und dem Wert 0 besetzt, wobei im Fall DC > 0 die Stelle an der linken oberen Ecke 101 mit dem Wert 1 und im Fall DC < 0 Stelle an der linken oberen Ecke 101 mit dem Wert 0 besetzt ist.

**Patentansprüche**

1. Vorrichtung zur Transformation entsprechend einer bestimmten Transformationsvorschrift (F) N-stelliger Wertetupel ($\underline{x}$) in jeweils zugeordnete transformierte M-stellige Wertetupel ($\underline{u}$), wobei

   - jede der N Stellen jedes zu transformierenden Wertetupels ($\underline{x}$) mit je einem aus einem bestimmten Wertevorrat (A) entnommenen Wert und
   - jede der M Stellen jedes transformierten Wertetupels ($\underline{u}$) mit je einem aus einem bestimmten Wertevorrat (B) entnommenen Wert besetzt ist, mit
   - einer Transformationseinrichtung (1) zur Realisierung der Transformationsvorschrift (F), die

      - einen Eingang (11) zum Zuführen jedes zu transformierenden Tupels ($\underline{x}$) und Einkoppeln dieses Tupels ($\underline{x}$) in die Einrichtung (1) aufweist,
      - aus jedem eingekoppelten Tupel ($\underline{x}$) das diesem Tupel ($\underline{x}$) zugeordnete transformierte Tupel ($\underline{u}$) entsprechend der Transformationsvorschrift (F) berechnet, und
      - einen Ausgang (12) zum Auskoppeln des diesem Tupel ($\underline{x}$) zugeordneten transfor-

mierten Tupels ($\underline{u}$) aus der Einrichtung (1) aufweist,

**gekennzeichnet durch**

- eine zusätzliche Einrichtung (1') zum

  - Fernhalten zumindest eines zu transformierenden bestimmten Tupels ($\underline{x}_0$) vom Eingang (11) der Transformationseinrichtung (1) und zur
  - Gewinnung des diesem bestimmten Tupel ($\underline{x}_0$) aufgrund der Transformationsvorschrift (F) zugeordneten transformierten Tupels ($\underline{u}_g$) auf eine von der Berechnung dieses transformierten Tupels ($\underline{u}_g$) in der Transformationseinrichtung (1) verschiedene Art und Weise.

2. Vorrichtung nach Anspruch 1, wobei die zusätzliche Einrichtung (1') aufweist

   - eine Tupel-Zuordnungseinrichtung (2) zum Zuordnen jedem zu transformierenden bestimmten Tupel ($x_0$) das diesem Tupel ($x_0$) zugeordnete transformierte Tupel ($\underline{u}_g$) auf andere Art und Weise als durch die Berechnung in der Transformationseinrichtung (1), die

     - einen Eingang (21) zum Einkoppeln jedes aus dem weiteren Ausgang (33) der Filtereinrichtung (3) ausgekoppelten bestimmten Tupels ($\underline{x}_0$) in die Zuordnungseinrichtung (2) und

     - einen Ausgang (22) zum Auskoppeln des diesem bestimmten Tupel ($\underline{x}_0$) in der Zuordnungseinrichtung (2) zugeordneten transformierten Tupels ($\underline{u}_g$) aus der Zuordnungseinrichtung (2) aufweist.

   - eine Tupel-Selektoreinrichtung (3),

     - der jedes zu transformierenden Tupel ($\underline{x}$) zugeführt ist,
     - die aus diesen Tupeln ($\underline{x}$) jedes zu transformierende bestimmte Tupel ($\underline{x}_0$) selektiert und nicht dem Eingang (11) der Transformationseinrichtung (1), sondern dem Eingang (21) der Tupel-Zuordnungseinrichtung (2) zuführt, und
     - die jedes von einem bestimmten Tupel ($\underline{x}_0$) verschiedene Tupel ($\underline{x}$) dem Eingang (11) der Transformationseinrichtung (1) zuführt.

3. Vorrichtung nach Anspruch 2, wobei die Tupel-Zuordnungseinrichtung (2) eine Tupel-Änderungseinrichtung (20) aufweist, welche das einem eingekoppelten bestimmten Tupel ($\underline{x}_0$) zugeordnete transformierte Tupel ($\underline{u}_g$) durch Änderung dieses bestimmten Tupels ($\underline{x}_0$) derart zuordnet, daß

- der Wert jeder Stelle ($c_i$) dieses bestimmten Tupels ($\underline{x}_0$)

  - bei einer Nichtübereinstimmung mit dem bekannten Wert der gleichen Stelle ($c_i$) dieses transformierten Tupels ($\underline{u}_g$) in den bekannten Wert geändert und
  - bei Übereinstimmung mit diesem bekannten Wert beibehalten wird, wobei

das derart geänderte bestimmte Tupel am Ausgang (22) der Tupel-Zuordnungseinrichtung (2) als das dem bestimmten Tupel ($\underline{x}_0$) zugeordnete transformierte Tupel ($\underline{u}_g$) ausgekoppelt wird.

4. Vorrichtung nach Anspruch 3, wobei der Wert einer Stelle ($c_i$) eines eingekoppelten bestimmten Tupels ($\underline{x}_0$) bei einer Nichtübereinstimmung mit dem bekannten Wert der gleichen Stelle ($c_i$) des diesem bestimmten Tupel ($\underline{x}_0$) zugeordneten transformierten Tupels ($\underline{u}_g$) durch eine Multiplikation mit einem Faktor (a), der diesen bekannten Wert ergibt, in den bekannten Wert geändert wird.

5. Vorrichtung nach einem der Ansprüche 2 bis 4, wobei die Tupel-Zuordnungseinrichtung (2)

   - einen Speicher (20') aufweist, in welchem ein transformiertes Tupel ($\underline{u}_g$), das einem zu transformierenden bestimmten Tupel ($\underline{x}_0$) zugeordnet ist, gespeichert ist, und aus dem dieses gespeicherte Tupel ($\underline{u}_g$) bei einer Einkopplung dieses zu transformierenden bestimmten Tupels ($\underline{x}_0$) ausgelesen und am Ausgang (22) der Tupel-Zuordnungseinrichtung (2) ausgegeben wird.

6. Vorrichtung nach einem der vorhergehenden Ansprüche, wobei die zusätzliche Einrichtung (1') aufweist

   - eine Zeitabstimmungseinrichtung (4), die bewirkt, daß jedes von dieser Einrichtung (1') einem zugeführten zu transformierenden bestimmten Tupel ($\underline{x}_0$) zugeordnete transformierte Tupel ($\underline{u}_g$) dem Ausgang (12) der Transformationseinrichtung (1) zu einem Zeitpunkt (t) zugeführt ist, der zwischen zwei transformierten Tupeln ($\underline{u}$) liegt, die am Ausgang (12) der Transformationseinrichtung (1) aufeinanderfolgend erscheinen und von der Transformationseinrichtung (1) aus zwei dem Eingang (11) der Transformationseinrichtung (1) hintereinander zugeführten zu transformierenden Tupeln ($\underline{x}$) berechnet worden sind, zwischen denen sich das bestimmte Tupel ($\underline{x}_0$) befindet, deren jedes von dem bestimmten Tupel ($\underline{x}_0$) verschieden ist und zwischen denen sich kein weiteres von dem bestimmten Tupel ($\underline{x}_0$) verschiedenes Tupel ($\underline{x}$) befindet.

**7.** Anordnung nach einem der vorhergehenden Ansprüche, wobei die Transformationsvorschrift (F) eine lineare Transformation ist, die einer Multiplikation jedes übertragenen Tupels ($\underline{x}$; $\underline{u}$) mit zumindest einer definierten Matrix (T; $T^T$) entspricht.

**8.** Anordnung nach Anspruch 7, wobei die lineare Transformation eine diskrete Cosinustransformation (DCT) ist.

**9.** Anordnung nach Anspruch 7, wobei die lineare Transformation eine inverse diskrete Cosinustransformation (IDCT) ist.

## FIG 1

$C_0$   $C_A$   $\cdots$   $C_i$   $\cdots$   $C_{N-1}$

10

$A = \{ a_0, a_1, \ldots a_j, \ldots a_{Ma} \}$

$B = \{ b_0, b_1, \ldots b_k, \ldots b_{Mb} \}$

## FIG 2

1'

20''   20   2

21   $\underline{x}_0 \rightarrow$   $\underline{u}_g$   22

20'

$\underline{x}_0$   4

$\underline{x} \rightarrow$   $\rightarrow$ $\underline{x}$   F   $\rightarrow$ $\underline{u}$   t

3   11   1   12

## FIG 3

## FIG 4